# EUROPÄISCHE PATENTSCHRIFT

(11) **EP 3 117 442 B1**
(45) Veröffentlichungstag und Bekanntmachung des Hinweises auf die Patenterteilung: **12.02.2020**
(21) Anmeldenummer: 14726332.1
(22) Anmeldetag: 12.05.2014
(51) Int. Cl.: H01B 17/28

(54) **HOCHSPANNUNGSDURCHFÜHRUNG**
HIGH-VOLTAGE FEEDTHROUGH
TRAVERSÉE À HAUTE TENSION

(43) Veröffentlichungstag der Anmeldung: 18.01.2017
(73) Patentinhaber: Siemens Aktiengesellschaft, 80333 München (DE)
(72) Erfinder: LANGENS, Achim, 53797 Lohmar (DE); ENGELS, Engelbert, 51143 Köln (DE)
(86) Internationale Anmeldenummer: PCT/EP2014/059627
(87) Internationale Veröffentlichungsnummer: WO 2015/172806

(56) Entgegenhaltungen:
- DE-A1- 1 540 492
- DE-A1- 2 911 402
- GB-A- 345 604
- GB-A- 531 591
- JP-A- H05 274 939

## Beschreibung

Die Erfindung betrifft eine Hochspannungsdurchführung mit einem konzentrisch um einen zylinderförmigen Wickelträger aus elektrisch leitendem Material angeordneten Isolationskörper, leitenden Steuereinlagen zur kapazitiven Steuerung der Hochspannungsdurchführung, die voneinander durch Isolierlagen beabstandet und zum Wickelträger konzentrisch angeordnet sind, sowie einer Verbindungseinrichtung zur Herstellung einer elektrischen Verbindung zwischen einer ersten, dem Wickelträger nächstliegenden Steuereinlage und dem Wickelträger.

Hochspannungsdurchführungen dieser Art sind aus dem Stand der Technik bekannt. Sie haben im Allgemeinen die Aufgabe, eine sich auf Hochspannungspotential befindende Hochspannungsleitung mit einem stromführenden Stromleiter von einer sich im Wesentlichen auf Erdpotential befindenden Wandung zu isolieren, durch die die Hochspannungsleitung durchgeführt werden soll.

Die Stromleiter beziehungsweise die Wickelträger der bekannten Hochspannungsdurchführungen sind allerdings meist nicht ideal zylindersymmetrisch und weisen herstellungsbedingte Unregelmäßigkeiten in ihrer Oberfläche auf. Aus diesen Gründen ist die Feldverteilung in der Umgebung des Stromleiters/Wickelträgers inhomogen, was eine Herabsetzung der Spannungsfestigkeit der Hochspannungsdurchführung zur Folge haben kann.

Daraus ergibt sich die elektrotechnische Notwendigkeit, den Wickelträger mit der ersten Steuereinlage mittels einer Verbindungseinrichtung elektrisch zu verbinden. Dies wird auch als Ankontaktierung bezeichnet.

Die DE 2911402 A1 beschreibt eine Kondensatordurchführung nach dem Oberbegriff des Anspruchs 1. Dabei umfasst die Verbindungseinrichtung der DE 2911402 A1 eine Buchse, die ortsfest mittels Gewindestiften und einer Anschlagskante mit dem Wickelträger verbunden ist. Die elektrische Kontaktierung zwischen der Buchse und dem Wickelträger wird mittels einer Kontaktfeder, die elektrische Kontaktierung zwischen der Buchse und einer Innenfläche des Kondensatorwickels mittels eines flexiblen Leiters hergestellt.

Bei den aus dem Stand der Technik bekannten Hochspannungsdurchführungen wird die Verbindungeinrichtung oftmals durch ein flexibles Metallband ausgeführt. Das Metallband ist an einem seiner Enden mit dem Wickelträger und mit dem anderen Ende an der ersten Steuereinlage fixiert. Ferner ist das Metallband fest von einem Isoliermedium des Isolierkörpers umschlossen. Infolge unterschiedlicher thermischer Ausdehnung des Isoliermediums beziehungsweise des Isolierkörpers und des Wickelkerns bzw. anderer Komponenten der Hochspannungsdurchführung oder auch infolge ihrer Relativbewegung, beispielsweise durch mechanische Krafteinwirkung, wird das Metallband mit Zug- oder Druckkräften belastet. Die Belastbarkeit der Ankontaktierung gegenüber solcher Krafteinwirkung wird bei den bekannten Hochspannungsdurchführungen durch die Duktilität des Metallbandes bestimmt. Das heißt, dass Relativbewegungen nur bis zu einer Streckgrenze des verwendeten Metalls kompensiert werden können. Ein Überdehnen des Metallbandes führt schließlich zu dessen Abreißen und damit zu einer Unterbrechung der Ankontaktierung. Dadurch ist die gesamte Hochspannungsdurchführung beschädigt und unter Umständen nicht mehr einsatzfähig.

In der DE 1 540 492 A ist eine Durchführung offenbart, bei eine Innenfläche eines Isolierstoffkörpers mit einer leitenden Schicht versehen ist. Ein mit dem Leiter fest verbundener Stützkörper liegt an der leitenden Schicht an, so dass nur Längsbewegungen zwischen dem Leiter und dem Isolierkörper im Bereich des Stützkörpers möglich sind.

Bei der GB 531 591 A wird ein Federring dazu verwendet, einen Kontakt zwischen einer leitenden Folie in einem Isolierkörper und dem Leiter herzustellen.

Die Aufgabe der vorliegenden Erfindung ist es, den genannten Nachteil zu überwinden und eine Hochspannungsdurchführung vorzuschlagen, deren Ankontaktierung gegenüber Relativbewegungen zwischen Isolationskörper und Wickelträger möglichst zuverlässig ist.

Die Aufgabe wird durch eine Hochspannungsdurchführung der eingangs angegebenen Art erfindungsgemäß dadurch gelöst, dass die Verbindungseinrichtung zwischen dem Wickelträger und der ersten Steuereinlage einen Gleitkontakt enthält.

Der Gleitkontakt erhöht die Zuverlässigkeit der Ankontaktierung, weil dadurch die Flexibilität der Verbindungseinrichtung nicht durch die maximale Streckfähigkeit des Materials der Verbindungseinrichtung begrenzt ist.

Erfindungsgemäß umfasst der elektrische Gleitkontakt ein erstes Kontaktstück, das mit der ersten Steuereinlage elektrisch verbunden ist, und ein zweites Kontaktstück, das mit dem Wickelträger elektrisch verbunden ist. Beispielsweise kann das erste Kontaktstück fest mit dem Isolationskörper verbunden sein, so dass es keine Relativbewegung zum Isolationskörper erfährt. Das zweite Kontaktstück kann am Wickelträger axial auf Höhe des ersten Kontaktstücks und diesem gegenüberliegend angeordnet sein. Dabei kontaktiert das erste Kontaktstück das zweite Kontaktstück. Geeigneterweise ist das zweite Kontaktstück derart angeordnet, dass es sich bei einer Relativbewegung des Wickelträgers zum Isolationskörper mit dem Wickelträger bewegt. Auf diese Weise wird erreicht, dass bei Relativbewegung des Wickelträgers und des Isolationskörpers der elektrische Kontakt zwischen dem ersten und dem zweiten Kontaktstück mittels des Gleitkontaktes aufrechterhalten wird. Dazu bestehen das erste und das zweite Kontaktstück geeigneterweise aus einem leitfähigen Material.

Gemäß einer Ausführungsform der Erfindung ist das erste Kontaktstück ein Metall-Ring, der umlaufend zwischen dem Wickelträger und dem Isolationskörper angeordnet ist. Die innere, dem Wickelträger zugewandte Oberfläche des Metall-Ringes bildet vorzugsweise eine Kontaktfläche des Gleitkontaktes. Der Metall-Ring ist geeigneterweise mittels eines Metallbandes mit der ersten Steuereinlage verbunden. Das Metallband kann beispielsweise während der Herstellung der Hochspannungsdurchführung in einen Rohwickel eingebracht werden, der anschließend mit einem fest werdenden Isoliermedium imprägniert wird, um auf diese Weise den Isolationskörper zu bilden. Somit ist das Metallband im Isolationskörper fixiert, so dass eine elektrische Verbindung zwischen der ersten Steuereinlage und dem Metall-Ring gewährleistet ist. Während einer Relativbewegung von Isolationskörper und Wickelträger bleibt das Metallband im Isolationskörper fixiert. Es wirken im Wesentlichen keine Zugkräfte auf das Metallband.

Als Material des Metall-Ringes ist aufgrund dessen elektrischer und mechanischer Eigenschaften Messing bevorzugt.

Vorzugsweise ist das erste Kontaktstück mittels eines Halteringes am Isolationskörper befestigt. Der Haltering ermöglicht eine verbesserte Fixierung des ersten Kontaktstückes am Isolationskörper. Der Haltering sollte geeigneterweise mit seinen Bindungseigenschaften an die Materialien des ersten Kontaktstückes und des Isolationskörpers angepasst sein.

Bevorzugt enthält der Haltering Harz. Dies führt insbesondere zu einer verbesserten Bindung des Halteringes an Isoliermedien des Isolationskörpers, falls diese ebenfalls Harz enthalten. Der Haltering kann beispielsweise ein Harz-PapierGemisch umfassen.

Gemäß der Erfindung ist das zweite Kontaktstück eine Kontaktfederanordnung, die in einer umlaufenden Nut im Wickelträger angeordnet ist. Die Anordnung der Kontaktfederanordnung in der umlaufenden Nut stellt sicher, dass die Kontaktfederanordnung im Wesentlichen translationsinvariant bezüglich des Wickelträgers angeordnet ist. Die Kontaktfederanordnung ist geeigneterweise derart ausgebildet, dass sie eine Kraftwirkung in Richtung des ersten Kontaktstückes ausbildet. Dies hat den Vorteil einer besonders stabilen elektrischen Verbindung zwischen dem ersten und dem zweiten Kontaktstück.

Bevorzugt ist die Kontaktfederanordnung in Form einer Schraubenfeder ausgeführt. Der Durchmesser der Wicklungen der Schraubenfeder ist derart bemessen, dass die Wicklungen der in der Nut angeordneten Schraubenfeder gegen das erste Kontaktstück drücken. Dies kann beispielsweise dadurch erreicht werden, dass der Durchmesser der Wicklungen etwas größer als die Tiefe der Nut ist.

Gemäß einer Ausführungsform der Erfindung ist der Wickelträger als Stromleiter ausgebildet. Dies vereinfacht die Herstellung der Hochspannungsdurchführung. Denkbar ist jedoch auch, dass der Stromleiter als separates Teil durch einem Innenraum des zylindrischen Wickelträgers geführt ist, wobei der Stromleiter in diesem Fall zur Ankontaktierung mit dem Wickelträger leitend verbunden ist, wobei die leitende Verbindung axial nur an einer Stelle angeordnet ist, um keinen Parallelstrompfad durch den Wickelträger zu erzeugen. Ein Zwischenraum zwischen dem Stromleiter und dem Wickelträger kann beispielsweise mit einem Isolierstoff ausgefüllt sein. Vorzugsweise ist der Isolationskörper mit einem Harz getränkt. Die Isolierlagen des Isolationskörpers können beispielsweise Papier, wie Krepppapier, oder Vlies enthalten, wobei die Isolierlagen im Herstellungsprozess der Hochspannungsdurchführung mit den leitenden Steuereinlagen auf den Wickelträger aufgewickelt werden. Der Isolationskörper mit den aufgewickelten Isolier- und Steuereinlagen wird anschließend in einem Harz oder Harzgemisch getränkt, so dass nach einem Aushärten der Harzmasse ein kompakter Block entsteht, der keine eingeschlossenen Hohlräume im Inneren des Isolationskörpers enthält.

Bevorzugt weist die Hochspannungsdurchführung einen Befestigungsflansch zur Montage der Hochspannungsdurchführung auf, der außen am Isolationskörper befestigt ist. Mittels des Befestigungsflansches kann die gesamte Hochspannungsdurchführung an der Begrenzungswandung einer Durchgangsöffnung, durch die die Hochspannungsleitung geführt werden soll, montiert werden.

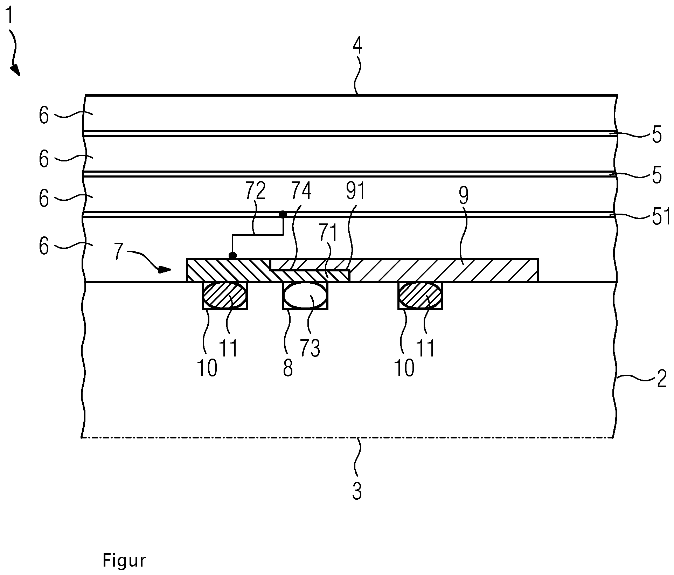

Die Erfindung wird im Folgenden anhand des in der Figur dargestellten Ausführungsbeispiels erläutert.

Die Figur zeigt einen Ausschnitt einer Ausführungsform der erfindungsgemäßen Hochspannungsdurchführung in einer schematischen Darstellung.

In der Figur ist ein Ausschnitt einer Hochspannungsdurchführung 1 im Querschnitt dargestellt. Der in der Figur gezeigte Ausschnitt der Hochspannungsdurchführung 1 weist einen Wickelträger 2 auf, der zylindrisch ausgebildet ist. Die Symmetrieachse des zylindrischen Wickelträgers 2 ist mit einer unterbrochenen Linie 3 gekennzeichnet. Im gezeigten Ausführungsbeispiel der Hochspannungsdurchführung 1 ist der Wickelträger 2 zugleich der Stromleiter. Koaxial um den Wickelträger 2 ist ein Isolationskörper 4 angeordnet.

Der Isolationskörper 4 umfasst Steuereinlagen 5, 51 zur kapazitiven Steuerung der Hochspannungsdurchführung wobei die Steuereinlagen 5, 51 koaxial zum Wickelträger 2 angeordnet sind. Zwischen den einzelnen Steuereinlagen 5, 51 befinden sich Isolierlagen 6. Die Isolierlagen 6 beinhalten ein Isoliermedium. Im vorliegenden Ausführungsbeispiel umfasst das Isoliermedium harzgetränktes Krepppapier.

Es ist zu beachten, dass in der Figur nicht alle Isolierlagen und nicht alle Steuereinlagen grafisch dargestellt sind. Die Maße der Hochspannungsdurchführung 1 und die Anzahl sowie der Abstand der Steuereinlagen zueinander hängen von den Anforderungen an die Isolierfähigkeit der Hochspannungsdurchführung ab.

Zur Ankontaktierung des Wickelträgers 2 mit der ersten Steuereinlage 51 weist die Hochspannungsdurchführung 1 eine Verbindungseinrichtung 7 auf. Die Verbindungseinrichtung 7 umfasst ein erstes Kontaktstück 71, das als ein Messingring ausgebildet ist. Der Messingring 71 ist mittels eines Metallbandes 72 mit der ersten Steuereinlage 51 elektrisch verbunden. Der Messingring 71 ist koaxial um den Wickelträger 2 angeordnet. Der Messingring 71 weist eine axiale Länge auf, die eine sichere Ankontaktierung bei temperaturbedingten Längendilatationen oder mechanisch bedingten Relativbewegungen von Isolationskörper 4 und Wickelträger 2 eine elektrische Verbindung zwischen dem Wickelträger 2 und dem Isolationskörper 4 gewährleistet. Die Verbindungseinrichtung 7 umfasst ferner ein zweites Kontaktstück 73, das in Form einer Schraubenfeder ausgebildet ist. Die Schraubenfeder ist in einer umlaufenden Nut 8 im Wickelträger 2 angeordnet. Die Durchmesser der Wicklungen der Schraubenfeder 73 sind derart bemessen, dass die Schraubenfeder gegen das erste Kontaktstück 71 drückt. Das heißt, dass die Durchmesser der Wicklungen der Schraubenfeder 73 etwas größer bemessen sind als die Tiefer der Nut 8.

Der Messingring 71 ist mittels eines Halterringes 9 am Isolationskörper befestigt. Der Haltering 9 besteht aus einem Harz-Papiergemisch, das sich gut mit dem Isoliermedium der Isolierlagen 6 und dem Material des ersten Kontaktstückes 71 verbindet.

Der Messingring 71 weist eine Stufe 74 auf, die zur verbesserten Halterung des Messingringes 71 am Isolationskörper 4 mit einer ihr entsprechenden Stufe 91 des Halteringes 9 zusammenwirkt.

Der Wickelträger 2 weist ferner zwei weitere Nuten 10 die umlaufend angeordnet sind. Dabei ist eine der Nuten 10 axial vor und eine weitere der Nuten 10 axial hinter der Nut 8 angeordnet. In den Nuten 10 sind jeweils Dichtringe 11 angeordnet. Die Dichtringe 11 sorgen dafür, dass im Herstellungsprozess der Hochspannungsdurchführung 1 die Nut 8 frei vom Isoliermedium, beispielsweise einem flüssigen, aushärtbaren Harz bleibt. Auf diese Weise kann erreicht werden, dass die Schraubenfeder 73 innerhalb der Nut 8 verformbar ist, so dass sie eine Kraftwirkung in Richtung des Messingrings ausüben kann.

Der Messingring 71 und das Metallband 72 sind am beziehungsweise im Isolationskörper 4 fixiert, so dass eine Relativbewegung zwischen dem Messingring 71 und dem Isolationskörper 4 nicht möglich ist. Wird nun aufgrund einer Relativbewegung zwischen dem Wickelkörper 2 und dem Isolationskörper 4 der Messingring relativ zu der Schraubenfeder 73 verschoben, so gleiten die Wicklungen der Schraubenfeder 73 an der inneren Kontaktfläche des Messingringes 71. Auf diese Weise wird ein Gleitkontakt zwischen dem Messingring 71 und der Spiralfeder 73 aufrechterhalten. Somit kann stets eine elektrische Verbindung zwischen dem Wickelträger 2 und der ersten Steuereinlage 51 gewährleistet werden. Da das Metallband 72 fest vom Isoliermedium der Isolierlage 7 umschlossen ist, kann eine Relativbewegung des Wickelkörpers zum Isolationskörper 4 ein Reißen des Metallbandes 72 nicht bewirken.

### Bezugszeichentabelle

- 1: Hochspannungsdurchführung
- 2: Wickelträger
- 3: Linie
- 4: Isolationskörper
- 5, 51: Steuereinlage
- 6: Isolierlage
- 7: Verbindungseinrichtung
- 71: erstes Kontaktstück
- 72: Metallband
- 73: zweites Kontaktstück
- 74: Stufe
- 8: Nut
- 9: Haltering
- 91: Stufe
- 10: Nut
- 11: Dichtring

## Patentansprüche

1. Hochspannungsdurchführung (1), umfassend
- einen konzentrisch um einen zylinderförmigen Wickelträger (2) aus elektrisch leitendem Material angeordneten Isolationskörper (4),
- leitende Steuereinlagen (5, 51) zur kapazitiven Steuerung der Hochspannungsdurchführung (1), die voneinander durch Isolierlagen (6) beabstandet und zum Wickelträger (2) konzentrisch angeordnet sind, sowie
- eine Verbindungseinrichtung (7) zur Herstellung einer elektrischen Verbindung zwischen einer ersten, dem Wickelträger nächstliegenden Steuereinlage (51) und dem Wickelträger (2),
**dadurch gekennzeichnet, dass**
die Verbindungseinrichtung (7) einen elektrischen Gleitkontakt enthält, wobei
der elektrische Gleitkontakt ein erstes Kontaktstück (71), das mit der ersten Steuereinlage (51) elektrisch verbunden ist, und ein zweites Kontaktstück (73), das mit dem Wickelträger (2) elektrisch verbunden ist, umfasst, wobei das zweite Kontaktstück (73) eine Kontaktfederanordnung ist, die in einer umlaufenden Nut (8) im Wickelträger (2) angeordnet ist.

2. Hochspannungsdurchführung (1) nach Anspruch 1, wobei das erste Kontaktstück (71) ein Metall-Ring ist, der umlaufend zwischen dem Wickelträger (2) und dem Isolationskörper (4) angeordnet ist.

3. Hochspannungsdurchführung (1) nach Anspruch 2, wobei der Metall-Ring ein Messing-Ring ist.

4. Hochspannungsdurchführung (1) nach Anspruch 1 bis 3, wobei das erste Kontaktstück (71) mittels eines Halteringes (9) am Isolationskörper (4) fixiert ist.

5. Hochspannungsdurchführung (1) nach Anspruch 4, wobei der Haltering Harz enthält.

6. Hochspannungsdurchführung (1) nach einem der vorangehenden Ansprüche, wobei die Kontaktfederanordnung eine Schraubenfeder ist.

7. Hochspannungsdurchführung (1) nach einem der Ansprüche 1 bis 6, wobei der Wickelkörper (2) als Stromleiter ausgebildet ist.

8. Hochspannungsdurchführung (1) nach einem der vorangehenden Ansprüche, wobei der Isolationskörper (4) mit einem Harz getränkt ist.

9. Hochspannungsdurchführung (1) nach einem der vorangehenden Ansprüche, wobei die Hochspannungsdurchführung (1) einen Befestigungsflansch zur Montage der Hochspannungsdurchführung (1) aufweist, der außen am Isolationskörper (4) befestigt ist.

## Claims

1. High-voltage feedthrough (1), comprising
- an insulating body (4) arranged concentrically around a cylindrical winding support (2) of an electrically conductive material,
- conductive control inserts (5, 51) for the capacitive control of the high-voltage feedthrough (1), which are mutually spaced by means of insulation layers (6) and arranged concentrically to the winding support (2), and
- a connection device (7) for the formation of an electrical connection between a first control insert (51) closest to the winding support, and the winding support (2),
**characterized in that** the connection device (7) incorporates a sliding electrical contact, wherein the sliding electrical contact comprises a first contact piece (71) which is electrically connected to the first control insert (51), and a second contact piece (73) which is electrically connected to the winding support (2), wherein the second contact piece (73) is a contact spring arrangement, which is arranged in a circumferential groove (8) in the winding support (2).

2. High-voltage feedthrough (1) according to Claim 1, wherein the first contact piece (71) is a metal ring, which is arranged circumferentially between the winding support (2) and the insulating body (4).

3. High-voltage feedthrough (1) according to Claim 2, wherein the metal ring is a brass ring.

4. High-voltage feedthrough (1) according to Claims 1 to 3, wherein the first contact piece (71) is secured to the insulating body (4) by means of a retaining ring (9).

5. High-voltage feedthrough (1) according to Claim 4, wherein the retaining ring contains resin.

6. High-voltage feedthrough (1) according to one of the preceding claims, wherein the contact spring arrangement is a helical spring.

7. High-voltage feedthrough (1) according to one of Claims 1 to 6, wherein the winding body (2) is configured as a conductor.

8. High-voltage feedthrough (1) according to one of the preceding claims, wherein the insulating body (4) is impregnated with a resin.

9. High-voltage feedthrough (1) according to one of the preceding claims, wherein the high-voltage feedthrough (1) is provided with a mounting flange for the fitting of the high-voltage feedthrough (1), which is secured to the exterior of the insulating body (4).

## Revendications

1. Traversée (1) de haute tension, comprenant
- une pièce (4) isolante, disposée concentriquement autour d'un support (2) de bobine de forme cylindrique en un matériau conducteur de l'électricité,
- des inserts (5, 51) conducteurs de commande pour la commande capacitive de la traversée (1) de haute tension, qui sont disposés à distance l'un de l'autre par des couches (6) isolantes et concentriquement au support (2) de bobine, ainsi que
- un dispositif (7) de connexion pour produire une connexion électrique entre un premier insert (51) de commande se trouvant le plus près du support de bobine et le support (2) de bobine,
**caractérisée en ce que**
le dispositif (7) de connexion comporte un contact électrique glissant, dans laquelle
le contact électrique glissant comprend une première pièce (71) de contact, qui est connectée électriquement au premier insert (51) de commande, et une deuxième pièce (73) de contact, qui est connectée électriquement au support (2) de bobine, la deuxième pièce (73) de contact ayant un agencement de ressort de contact, qui est disposé dans une rainure (8) faisant le tour du support (2) de bobine.

2. Traversée (1) de haute tension suivant la revendication 1, dans laquelle la première pièce (71) de contact est une bague métallique, qui est disposée, en faisant le tour, entre le support (2) de bobine et la pièce (4) isolante.

3. Traversée (1) de haute tension suivant la revendication 2, dans laquelle la bague métallique est une bague en laiton.

4. Traversée (1) de haute tension suivant la revendication 1 à 3, dans laquelle la première pièce (71) de contact est immobilisée sur la pièce (4) isolante au moyen d'une bague (9) de maintien.

5. Traversée (1) de haute tension suivant la revendication 4, dans laquelle la bague de maintien contient de la résine.

6. Traversée (1) de haute tension suivant l'une des revendications précédentes, dans laquelle l'agencement de ressort de contact est un ressort hélicoïdal.

7. Traversée (1) de haute tension suivant l'une des revendications 1 à 6, dans laquelle le support (2) de bobine est constitué sous la forme d'un conducteur de courant.

8. Traversée (1) de haute tension suivant l'une des revendications précédentes, dans laquelle la pièce (4) isolante est imprégnée d'une résine.

9. Traversée (1) de haute tension suivant l'une des revendications précédentes, dans laquelle la traversée (1) de haute tension a, pour le montage de la traversée (1) de haute tension, une bride de fixation, qui est fixée à l'extérieur à la pièce (4) isolante.
